# FASCICULE DE BREVET EUROPEEN

(11) **EP 4 004 359 B1**
(45) Date de publication et mention de la délivrance du brevet: **27.09.2023**
(21) Numéro de dépôt: 20775388.0
(22) Date de dépôt: 27.08.2020
(51) Int. Cl.: F02K 1/12, F02K 1/38, F02K 1/80

(54) **COUPLE VOLET CONVERGENT-VOLET DIVERGENT POUR TUYÈRE DE TURBORÉACTEUR À GÉOMÉTRIE VARIABLE COMPRENANT DES CONDUITS DE CIRCULATION D'AIR DE REFROIDISSEMENT RACCORDÉS AU TRAVERS DE SURFACES DE CONTACT**
KONVERGENT-DIVERGENTES KLAPPENPAAR FÜR EINE TURBOSTRAHLTRIEBWERKDÜSE MIT VARIABLER GEOMETRIE MIT DURCH KONTAKTFLÄCHEN VERBUNDENEN KÜHLLUFTZIRKULATIONSKANÄLEN
CONVERGENT-DIVERGENT FLAP PAIR FOR A VARIABLE-GEOMETRY TURBOJET ENGINE NOZZLE COMPRISING COOLING AIR CIRCULATION DUCTS CONNECTED THROUGH CONTACT SURFACES

(30) Priorité: 30.08.2019 FR 1909540
(43) Date de publication de la demande: 01.06.2022
(73) Titulaire: SAFRAN AIRCRAFT ENGINES, 75015 Paris (FR)
(72) Inventeur: KOHN, Thierry, 77550 MOISSY-CRAMAYEL (FR); EICHSTADT, Frédéric, Paul, 77550 MOISSY-CRAMAYEL (FR); LACOMBE, Florent, Luc, 77550 MOISSY-CRAMAYEL (FR); LEGLAYE, François, 77550 MOISSY-CRAMAYEL (FR); LE PANNERER, Brice, Marie, Yves, Emile, 77550 MOISSY-CRAMAYEL (FR)
(74) Mandataire: Brevalex
(86) Numéro de dépôt international: PCT/FR2020/051505
(87) Numéro de publication internationale: WO 2021/038172

(56) Documents cités:
- GB-A- 2 235 728
- US-A- 4 081 137
- US-A- 5 111 550
- US-A- 5 775 589

## Description

### DOMAINE TECHNIQUE

La présente invention se rapporte au domaine des turboréacteurs destinés à la propulsion des aéronefs aptes au vol supersonique, et concerne plus particulièrement un couple volet convergent-volet divergent pour une tuyère de turboréacteur de type convergente-divergente à géométrie variable, une tuyère équipée d'un tel couple volet convergent-volet divergent, et un turboréacteur comprenant une telle tuyère.

### ÉTAT DE LA TECHNIQUE ANTÉRIEURE

Les turboréacteurs destinés au vol supersonique comprennent en général un canal de postcombustion dont la sortie est délimitée par une tuyère axisymétrique de type convergente-divergente, afin de permettre l'accélération du flux d'air sortant du réacteur à des vitesses supérieures à Mach 1.

Pour être efficace aux différentes vitesses auxquelles un aéronef supersonique est susceptible de voler, une telle tuyère présente une géométrie variable, permettant de faire varier la section interne de la tuyère et notamment la position et la forme du col de la tuyère.

À cet effet, une telle tuyère comporte un ensemble de volets internes mobiles destinés à canaliser le flux de gaz sortant du réacteur, cet ensemble comprenant une rangée annulaire de volets convergents suivie d'une rangée annulaire de volets divergents. Les volets divergents sont en général articulés à leurs extrémités amont respectives sur des extrémités aval respectives des volets convergents, et les volets convergents sont eux-mêmes articulés à leurs extrémités amont respectives sur une structure statorique du turboréacteur. L'ensemble de volets internes mobiles est donc constitué d'une rangée annulaire de couples volet convergent-volet divergent.

Une telle tuyère comporte en outre une rangée annulaire de volets externes mobiles entourant l'ensemble de volets internes mobiles.

Des tuyères avec un couple volet convergent-volet divergent selon l'art antérieur sont divulguées dans les documents US5111550 A, US4081137 A, US5775589 A et GB2235728 A.

Compte-tenu de la température élevée des gaz en sortie d'un canal de postcombustion, il est souhaitable d'assurer un refroidissement des volets internes d'une telle tuyère afin de garantir leur tenue mécanique.

À cet effet, de l'air de refroidissement doit être prélevé dans le flux d'air travaillant du turboréacteur, c'est pourquoi il est souhaitable de limiter la quantité d'air nécessaire au refroidissement afin d'optimiser les performances propulsives du réacteur.

Un tel objectif entre toutefois en contradiction avec le souhait d'accroître la richesse des gaz en postcombustion pour améliorer les performances propulsives des turboréacteurs, dès lors qu'un tel accroissement de richesse implique un accroissement de température des gaz, et donc un accroissement du besoin en refroidissement.

### EXPOSÉ DE L'INVENTION

L'invention a notamment pour but de résoudre au moins partiellement le problème ci-dessus, et en particulier de proposer une solution efficace de refroidissement des volets internes mobiles d'une tuyère convergente-divergente à géométrie variable de turboréacteur, tout en limitant l'impact négatif d'un tel refroidissement sur les performances propulsives du turboréacteur.

L'invention propose à cet effet un couple volet convergent-volet divergent pour tuyère de turboréacteur de type convergente-divergente à géométrie variable, comprenant un volet convergent, et un volet divergent monté pivotant sur le volet convergent autour d'un axe de pivotement, moyennant quoi le couple volet convergent-volet divergent est apte à passer d'une première configuration angulaire extrême, dans laquelle le volet convergent et le volet divergent font entre eux un angle saillant maximal, à une deuxième configuration angulaire extrême, dans laquelle le volet convergent et le volet divergent font entre eux un angle saillant minimal inférieur à l'angle saillant maximal,
dans lequel le volet convergent comporte une paroi interne respective, présentant une surface interne respective de canalisation de gaz de combustion et une surface externe respective, et une paroi externe respective,
dans lequel le volet convergent comporte un conduit de circulation d'air de refroidissement respectif défini entre la surface externe respective de la paroi interne respective du volet convergent et la paroi externe respective du volet convergent,
dans lequel le volet divergent comporte une paroi interne respective, présentant une surface interne respective de canalisation de gaz de combustion et une surface externe respective, et une paroi externe respective,
dans lequel le volet divergent comporte un conduit de circulation d'air de refroidissement respectif défini entre la surface externe respective de la paroi interne respective du volet divergent et la paroi externe respective du volet divergent,
dans lequel le volet convergent comporte une surface de contact de volet convergent en forme de portion de cylindre ayant pour axe de courbure l'axe de pivotement et pourvue de premiers orifices de passage d'air débouchant dans le conduit de circulation d'air de refroidissement respectif du volet convergent,
dans lequel le volet divergent comporte une surface de contact de volet divergent en forme de portion de cylindre ayant pour axe de courbure l'axe de pivotement et pourvue de deuxièmes orifices de passage d'air débouchant dans le conduit d'air de refroidissement respectif du volet divergent,
dans lequel la surface de contact de volet divergent est agencée directement en regard de la surface de contact de volet convergent, de sorte que la surface de contact de volet divergent glisse le long de la surface de contact de volet convergent lorsque le volet divergent pivote par rapport au volet convergent,
dans lequel les premiers orifices de passage d'air et les deuxièmes orifices de passage d'air sont conformés et positionnés de sorte que les premiers orifices de passage d'air soient agencés directement en regard des deuxièmes orifices de passage d'air respectivement et mettent ainsi en communication le conduit de circulation d'air de refroidissement respectif du volet convergent et le conduit d'air de refroidissement respectif du volet divergent, quelle que soit la configuration angulaire adoptée par le couple volet convergent-volet divergent.

L'invention permet ainsi un refroidissement efficace de volets internes mobiles, ne requérant qu'une quantité d'air modérée, et ayant donc un impact modéré sur les performances d'un turboréacteur équipé d'une telle tuyère.

L'invention permet ainsi d'améliorer la tenue mécanique de volets internes mobiles et de maîtriser le comportement thermique de ces derniers.

L'invention permet en outre de limiter la température d'une telle tuyère, et donc de limiter le signal infrarouge de celle-ci.

La limitation de la température de la tuyère permet en outre l'utilisation d'un plus large choix de matériaux au sein de celle-ci, notamment des matériaux d'absorption électromagnétique qui sont en général peu tolérants à l'égard des hautes températures.

Dans un mode de réalisation préféré de l'invention, un premier conduit, parmi le conduit de circulation d'air de refroidissement respectif du volet convergent et le conduit d'air de refroidissement respectif du volet divergent, est interposé entre l'axe de pivotement et une surface correspondante, parmi la surface de contact de volet convergent et la surface de contact de volet divergent.

De préférence, la paroi interne respective de celui, parmi le volet convergent et le volet divergent, qui comporte ledit premier conduit, présente une portion d'extrémité incurvée sur laquelle est formée ladite surface correspondante et comportant ceux, parmi les premiers orifices de passage d'air et les deuxièmes orifices de passage d'air, qui appartiennent à ladite surface correspondante.

De préférence, celui, parmi le volet convergent et le volet divergent, qui comporte l'autre conduit parmi le conduit de circulation d'air de refroidissement respectif du volet convergent et le conduit d'air de refroidissement respectif du volet divergent, comporte une paroi de fermeture respective, sur laquelle est formée l'autre surface, parmi la surface de contact de volet convergent et la surface de contact de volet divergent, ladite paroi de fermeture comportant ceux, parmi les premiers orifices de passage d'air et les deuxièmes orifices de passage d'air, qui appartiennent à ladite autre surface, et ladite paroi de fermeture reliant mutuellement deux extrémités respectives de la paroi interne et de la paroi externe du volet.

De préférence, ledit premier conduit est le conduit d'air de refroidissement respectif du volet divergent.

De préférence, le volet convergent comporte deux parois d'extrémité latérale reliant chacune la paroi interne respective du volet convergent à la paroi externe respective du volet convergent, de sorte que le conduit de circulation d'air de refroidissement respectif du volet convergent est en outre délimité par les parois d'extrémité latérale respectives du volet convergent.

De préférence, le volet divergent comporte deux parois d'extrémité latérale reliant chacune la paroi interne respective du volet divergent à la paroi externe respective du volet divergent, de sorte que le conduit d'air de refroidissement respectif du volet divergent est en outre délimité par les parois d'extrémité latérale respectives du volet divergent.

L'invention concerne également tuyère de type convergente-divergente à géométrie variable pour turboréacteur, comprenant des couples volet convergent-volet divergent répartis autour d'un axe de la tuyère et dont au moins certains sont des couples volet convergent-volet divergent du type décrit ci-dessus, et un canal de circulation de gaz de combustion délimité au moins par les surfaces internes respectives de canalisation de gaz de combustion des volets convergents respectifs et des volets divergents respectifs des couples volet convergent-volet divergent.

L'invention concerne aussi un turboréacteur pour aéronef, comprenant un canal de postcombustion entouré d'un plenum de refroidissement séparé du canal de postcombustion par une chemise de protection thermique, et une tuyère du type décrit ci-dessus, dans lequel les conduits de circulation d'air de refroidissement respectifs des volets convergents des couples volet convergent-volet divergent du type décrit ci-dessus de la tuyère sont raccordés au plenum de refroidissement entourant le canal de postcombustion.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une demi-vue schématique en section axiale d'un turboréacteur comprenant une tuyère de type convergente-divergente à géométrie variable, agencée en sortie d'un canal de postcombustion ;
- la figure 2 est une demi-vue schématique en coupe axiale d'un canal de postcombustion et d'une tuyère de type convergente-divergente à géométrie variable d'un type connu ;
- la figure 3 est une vue schématique partielle en perspective d'une rangée annulaire de volets divergents faisant partie de la tuyère de la figure 2 ;
- la figure 4 est une vue schématique partielle en coupe axiale de la tuyère de type convergente-divergente à géométrie variable du turboréacteur de la figure 1, comprenant des couples volet convergent-volet divergent selon un mode de réalisation préféré de l'invention, dont l'un est visible dans une première configuration ;
- la figure 5A est une vue à plus grande échelle d'une partie de la figure 4 ;
- la figure 5B est une vue semblable à la figure 5A, illustrant le couple volet convergent-volet divergent dans une deuxième configuration ;
- la figure 6 est une vue schématique partielle en perspective d'un couple volet convergent-volet divergent selon un mode de réalisation préféré de l'invention, qui fait partie de la tuyère de type convergente-divergente à géométrie variable de la figure 4 ;
- la figure 7 est une vue schématique partielle en perspective du couple volet convergent-volet divergent de la figure 6, dans un état désassemblé.

Dans l'ensemble de ces figures, des références identiques peuvent désigner des éléments identiques ou analogues.

### EXPOSÉ DÉTAILLÉ DE MODES DE RÉALISATION PRÉFÉRÉS

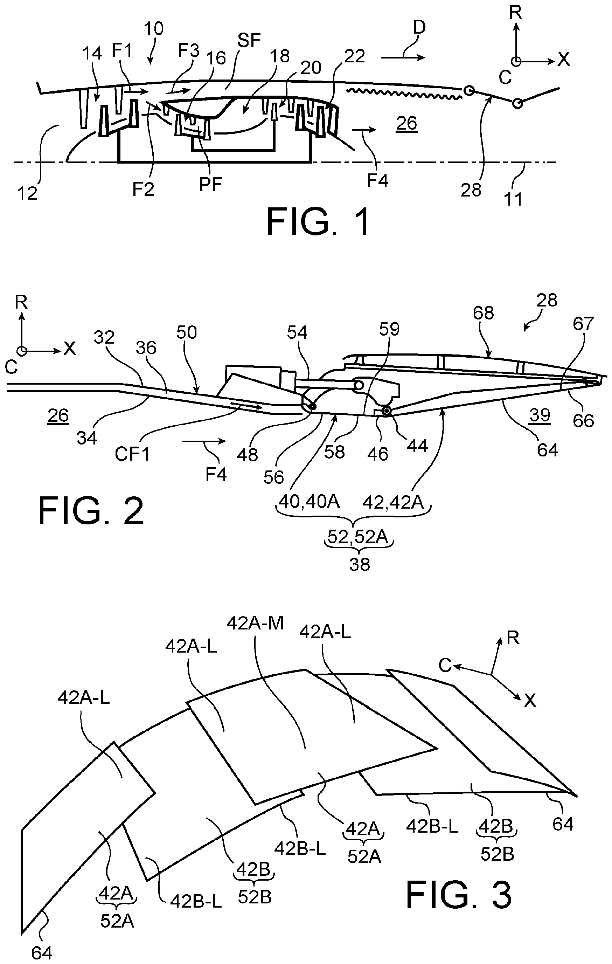

La figure 1 illustre un turboréacteur 10, par exemple à double corps et à double flux, destiné à la propulsion d'un aéronef apte au vol supersonique, et donc destiné en particulier à être installé dans le fuselage d'un tel aéronef.

Dans l'ensemble de cette description, la direction axiale X est la direction de l'axe longitudinal 11 du turboréacteur. Sauf lorsqu'il en est stipulé autrement, la direction radiale R est en tout point une direction orthogonale à l'axe longitudinal 11 et passant par ce dernier, et la direction circonférentielle C est en tout point une direction orthogonale à la direction radiale R et à l'axe longitudinal 11. Sauf lorsqu'il en est stipulé autrement, les termes « interne » et « externe » font respectivement référence à une relative proximité, et un relatif éloignement, d'un élément par rapport à l'axe longitudinal 11. Enfin, les qualificatifs « amont » et « aval » sont définis par référence à une direction générale D de l'écoulement des gaz dans le turboréacteur 10.

Un tel turboréacteur 10 comprend, titre illustratif, de l'amont vers l'aval, une entrée d'air 12, un compresseur basse pression 14, un compresseur haute pression 16, une chambre de combustion 18, une turbine haute pression 20, une turbine basse pression 22, un canal de postcombustion 26, et une tuyère 28 de type convergente-divergente à géométrie variable. Ces organes du turboréacteur sont tous centrés selon l'axe longitudinal 11 du turboréacteur.

De manière bien connue, le compresseur haute pression 16, la chambre de combustion 18, et les turbines haute pression 20 et basse pression 22, définissent une veine primaire PF. Cette dernière est entourée par une veine secondaire SF de la turbomachine qui s'étend de l'amont vers l'aval à partir d'une sortie du compresseur basse pression. Ainsi, en fonctionnement, de l'air F1 qui est entré par l'entrée d'air 12 et qui a été comprimé par le compresseur basse pression 14, se divise ensuite en un flux primaire F2 qui circule dans la veine primaire et en un flux secondaire F3 qui circule dans la veine secondaire 30. Le flux primaire F2 est alors comprimé davantage dans le compresseur haute pression 16, puis mélangé à du carburant et enflammé dans la chambre de combustion 18, avant de subir une détente dans la turbine haute pression 20 puis dans la turbine basse pression 22.

Le flux de gaz F4, constitué par le mélange des gaz de combustion, issus de la veine primaire, et du flux secondaire F3, circule ensuite dans le canal de postcombustion 26, puis s'échappe du turboréacteur 10 au travers de la tuyère 28.

En régime de fonctionnement avec postcombustion, par exemple pour propulser un aéronef à des vitesses supersoniques, du carburant est mélangé au flux de gaz F4 au sein du canal de postcombustion 26, et le mélange ainsi constitué est enflammé au sein de ce canal de postcombustion, afin de générer un surcroît de poussée. La configuration convergente-divergente de la tuyère 28 permet alors d'accélérer le flux de gaz F4 à des vitesses supersoniques.

La figure 2 illustre à plus grande échelle le canal de postcombustion 26, et la tuyère 28, dans une configuration connue de l'art antérieur.

Le canal de postcombustion 26 comporte une enveloppe extérieure 32 de forme de révolution, et une chemise de protection thermique 34 s'étendant coaxialement à l'enveloppe extérieure 32 à l'intérieur de cette dernière. L'enveloppe extérieure 32 et la chemise de protection thermique 34 délimitent entre elles un plenum de refroidissement 36 destiné à la circulation d'un flux d'air de refroidissement CF1 le long de l'enveloppe extérieure 32.

La tuyère 28 comporte un ensemble 38 de volets internes mobiles délimitant extérieurement un canal de circulation de gaz de combustion 39, qui correspond, au sein du turboréacteur, à une partie d'extrémité aval du canal de postcombustion 26. Les volets internes mobiles permettent ainsi de canaliser le flux de gaz F4 en sortie du turboréacteur 10 en fonctionnement.

L'ensemble 38 de volets internes mobiles comprend, en amont, une rangée annulaire de volets convergents 40, suivie, en aval, d'une rangée annulaire de volets divergents 42.

Les volets divergents 42 sont articulés, à leurs extrémités amont 44 respectives, respectivement sur des extrémités aval 46 respectives des volets convergents 40. Les volets convergents 40 sont eux-mêmes articulés à leurs extrémités amont 48 respectives sur une structure statorique 50 du turboréacteur.

L'ensemble 38 de volets internes mobiles est donc constitué d'une rangée annulaire de couples volet convergent-volet divergent 52, les volets de chaque couple étant articulés pour être aptes à passer d'une première configuration angulaire extrême, dans laquelle le volet convergent et le volet divergent font entre eux un angle saillant maximal, à une deuxième configuration angulaire extrême, dans laquelle le volet convergent et le volet divergent font entre eux un angle saillant minimal inférieur à l'angle saillant maximal, et inversement, d'une manière connue en soi.

Par exemple, l'ensemble 38 comporte des couples volet convergent-volet divergent commandés 52A, et des couples volet convergent-volet divergent suiveurs 52B, disposés en alternance dans la direction circonférentielle C. Les couples volet convergent-volet divergent commandés 52A sont constitués de volets convergents commandés 40A et de volets divergents commandés 42A, tandis que les couples volet convergent-volet divergent suiveurs 52B sont constitués de volets convergents suiveurs 40B et de volets divergents suiveurs 42B. La figure 3 montre des volets divergents 42A, 42B respectifs de couples commandés 52A et de couples suiveurs 52B.

Les couples commandés 52A, dont l'un est visible sur la figure 2, sont directement reliés à des organes d'actionnement 54 respectifs de la tuyère, lesquels organes d'actionnement sont montés sur la structure statorique 50 du turboréacteur, de manière à commander directement le déplacement des couples commandés 52A. Les couples suiveurs 52B coopèrent avec les couples commandés 52A adjacents par l'intermédiaire d'organes d'entraînement (non visibles sur les figures) configurés pour communiquer un déplacement des couples commandés 52A aux couples suiveurs 52B.

Les volets convergents 40 comportent chacun une paroi de canalisation de gaz de combustion 56 respective, s'étendant selon une direction longitudinale respective du volet, et présentant, d'un côté radialement interne, une surface interne de canalisation de gaz de combustion 58 respective, et, d'un côté radialement externe, une surface externe 59 respective.

Les volets divergents 42 comportent chacun une paroi de canalisation de gaz de combustion 64 respective, s'étendant selon une direction longitudinale respective du volet, et présentant, d'un côté radialement interne, une surface interne de canalisation de gaz de combustion 66 respective, et, d'un côté radialement externe, une surface externe 67 respective.

Les surfaces internes de canalisation de gaz de combustion 58 et 66 respective des volets convergents 40 et des volets divergents 42 délimitent le canal de circulation de gaz de combustion 39, et permettent donc de canaliser le flux de gaz F4 en sortie du turboréacteur 10.

La tuyère 28 comporte en outre une rangée annulaire de volets externes mobiles 68 entourant l'ensemble 38 de volets internes mobiles (figure 2) et articulés sur la structure statorique 50 du turboréacteur de manière à se déplacer de manière synchronisée avec l'ensemble 38 de volets internes mobiles.

En fonctionnement, l'air de refroidissement provenant du plenum de refroidissement 36 s'échappe librement vers l'aval et vers les côtés après avoir contribué au refroidissement de l'enveloppe extérieure 32, et contribue éventuellement de manière marginale au refroidissement de l'ensemble 38 de volets internes mobiles.

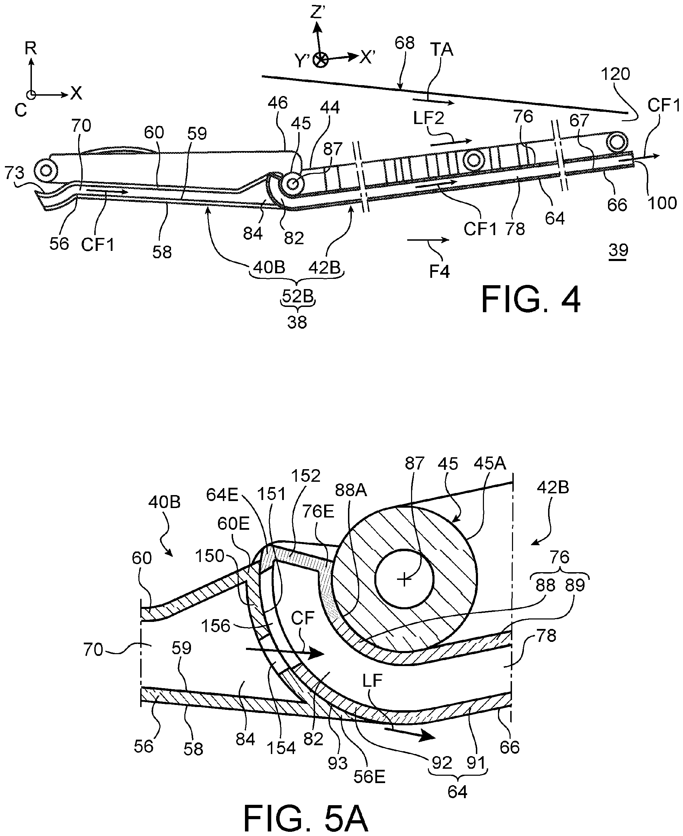

L'invention, dont un mode de réalisation préféré va maintenant être décrit en référence aux figures 4 à 7, propose une amélioration de la tuyère 28 de type convergente-divergente à géométrie variable. Plus précisément, l'invention permet une amélioration du refroidissement de l'ensemble 38 de volets internes mobiles, comme cela apparaîtra plus clairement dans ce qui suit.

La figure 4 montre plus particulièrement un couple volet convergent-volet divergent suiveur 52B, ainsi que, disposé radialement en regard de celui-ci, un volet externe mobile 68, illustré très schématiquement. Les explications données ci-après en référence aux figures 4 à 7 sont valables pour chacun des couples volet convergent-volet divergent suiveur 52B de la tuyère 28.

Le couple volet convergent-volet divergent suiveur 52B, également visible sur les figures 5A à 7, comprend un volet convergent 40B et un volet divergent 42B.

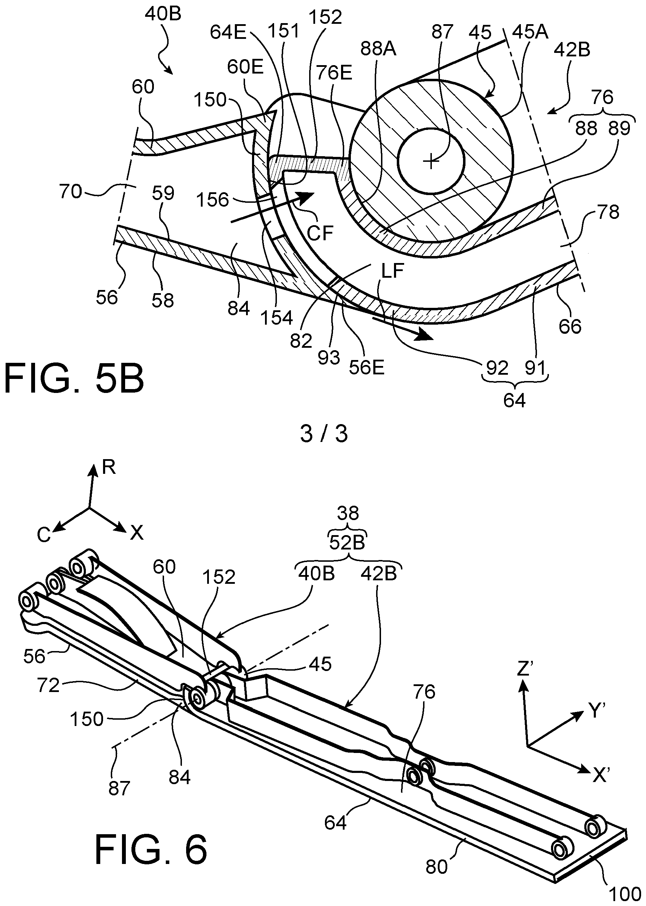

Comme expliqué ci-dessus, le volet divergent 42B est articulé à son extrémité amont 44 sur l'extrémité aval 46 du volet convergent 40B, par exemple au moyen d'une articulation par charnière 45, moyennant quoi le couple volet convergent-volet divergent suiveur 52B est apte à passer d'une première configuration angulaire extrême (figure 5A), dans laquelle le volet convergent 40B et le volet divergent 42B font entre eux un angle saillant maximal, à une deuxième configuration angulaire extrême (figure 5B), dans laquelle le volet convergent 40B et le volet divergent 42B font entre eux un angle saillant minimal inférieur à l'angle saillant maximal.

De manière analogue à ce qui est décrit ci-dessus, le volet convergent 40B comporte une paroi de canalisation de gaz de combustion respective, dénommée paroi interne 56 dans ce qui suit, s'étendant selon une direction longitudinale respective du volet, et présentant, d'un côté radialement interne, une surface interne de canalisation de gaz de combustion 58 respective, et, d'un côté radialement externe, une surface externe 59 respective.

Le volet convergent 40B comporte une paroi externe 60 respective, s'étendant en vis-à-vis de la surface externe 59 de la paroi interne 56 de ce volet (figures 4, 5A-5B et 7), par exemple parallèlement à la paroi interne 56.

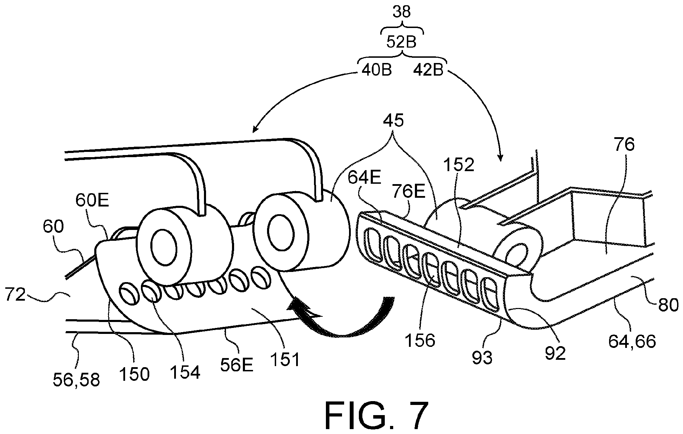

Le volet convergent 40B comporte en outre deux parois d'extrémités latérales 72 opposées respectives reliant chacune la paroi interne 56 de ce volet à la paroi externe 60 de ce volet (figures 6 et 7).

Ainsi, le volet convergent 40B comporte un conduit de circulation d'air de refroidissement 70 respectif (figures 4, 5A-5B, 7) défini entre la paroi interne 56 et la paroi externe 60 du volet 40B, et entre les deux parois d'extrémités latérales 72 de ce volet.

Le conduit de circulation d'air de refroidissement 70 du volet convergent 40B comporte, à son extrémité amont, un embout 73 (figure 4) configuré pour être raccordé au plenum de refroidissement 36 entourant le canal de postcombustion 26 (figure 2), de sorte que le conduit de circulation d'air de refroidissement 70 reçoive une partie du flux d'air de refroidissement CF1, en fonctionnement.

De plus, le conduit de circulation d'air de refroidissement 70 est donc délimité notamment par la surface externe 59 de la paroi interne 56 du volet (figures 4, 5A-5B). Cette dernière paroi est ainsi refroidie par de l'air circulant dans le conduit de circulation d'air de refroidissement 70, en fonctionnement.

De manière analogue à ce qui est décrit ci-dessus, le volet divergent 42B comporte une paroi de canalisation de gaz de combustion respective, dénommée paroi interne 64 dans ce qui suit, s'étendant selon une direction longitudinale respective du volet, et présentant, d'un côté radialement interne, une surface interne de canalisation de gaz de combustion 66 respective, et, d'un côté radialement externe, une surface externe 67 respective.

Pour faciliter la présente description, un repère orthonormé X', Y', Z' est défini de sorte que la direction X' corresponde à la direction longitudinale du volet divergent 42B, et donc en particulier de la paroi interne 64 de celui-ci, et que la direction Y' corresponde à une direction transversale du volet divergent, et la direction Z' corresponde à la direction de l'épaisseur du volet divergent.

Le volet divergent 42B comporte en outre une paroi externe 76 respective s'étendant en vis-à-vis de la surface externe 67 de la paroi interne 64 de ce volet, par exemple parallèlement à la paroi interne 64, de sorte que ces deux parois 64 et 76 définissent entre elles un conduit de circulation d'air de refroidissement 78 respectif du volet divergent 42B (figures 4, 5A-5B, 7).

Le volet divergent 42B comporte en outre deux parois d'extrémités latérales 80 respectives reliant chacune la paroi interne 64 à la paroi externe 76 du volet divergent (figures 6 et 7), de sorte que les deux parois d'extrémités latérales 80 ferment latéralement (et délimitent donc entre elles) le conduit de circulation d'air de refroidissement 78 du volet divergent 42B.

Le conduit de circulation d'air de refroidissement 78 du volet divergent 42B est raccordé au conduit de circulation d'air de refroidissement 70 du volet convergent 40B (figures 5A, 5B). Le conduit de circulation d'air de refroidissement 78 du volet divergent 42B reçoit ainsi le flux d'air de refroidissement issu du conduit de circulation d'air de refroidissement 70 du volet convergent 40B, ou au moins une partie majoritaire de celui-ci, en fonctionnement.

En particulier, le volet convergent 40B comporte une paroi de fermeture 150 respective reliant une extrémité aval 56E de la paroi interne 56 du volet, à une extrémité aval 60E de la paroi externe 60 du volet, de sorte que la paroi de fermeture 150 délimite une portion d'extrémité aval 84 du conduit de circulation d'air de refroidissement 70 du volet convergent 40B.

La paroi de fermeture 150 est conformée de manière à présenter, du côté extérieur au conduit de circulation d'air de refroidissement 70 du volet convergent 40B, une surface de contact de volet convergent 151 en forme de portion de cylindre de révolution d'axe coïncidant avec un axe de pivotement 87 autour duquel le volet divergent 42B pivote par rapport au volet convergent 40B lorsque le couple volet convergent-volet divergent suiveur 52B passe de l'une à l'autre des première et deuxième configurations angulaires extrêmes. Autrement dit, l'axe de pivotement 87 constitue l'axe de courbure de la surface de contact de volet convergent 151, cette dernière étant concave lorsque vue depuis l'axe de pivotement 87.

Dans l'exemple illustré, la paroi de fermeture 150 est elle-même en forme de portion de cylindre, et présente donc aussi une surface de forme semblable du côté de l'intérieur du conduit de circulation d'air de refroidissement 70.

De plus, la paroi interne 56 du volet convergent 40B présente une forme plane jusqu'à l'extrémité aval 56E de cette paroi.

La paroi interne 64 du volet divergent 42B comporte une portion principale 91 respective, par exemple de forme plane, et une portion d'extrémité amont 92 incurvée de manière à présenter, du côté extérieur au conduit de circulation d'air de refroidissement 78 du volet divergent 42B, une surface de contact de volet divergent 93 en forme de portion de cylindre de révolution d'axe coïncidant avec l'axe de pivotement 87.

Dans l'exemple illustré, la portion d'extrémité amont 92 est elle-même en forme de portion de cylindre, et présente donc aussi une surface de forme semblable du côté de l'intérieur du conduit de circulation d'air de refroidissement 78.

De manière analogue, la paroi externe 76 du volet divergent 42B comporte une portion principale 89 respective, par exemple de forme plane, et une portion d'extrémité amont 88 incurvée de manière à présenter, du côté extérieur au conduit de circulation d'air de refroidissement 78 du volet divergent 42B, une surface externe 88A en forme de portion de cylindre de révolution d'axe coïncidant avec l'axe de pivotement 87.

Dans l'exemple illustré, la portion d'extrémité amont 88 est elle-même en forme de portion de cylindre, et présente donc aussi une surface de forme semblable du côté de l'intérieur du conduit de circulation d'air de refroidissement 78.

Le conduit de circulation d'air de refroidissement 78 du volet divergent 42B présente ainsi une portion d'extrémité amont 82 incurvée, ayant pour axe de courbure l'axe de pivotement 87.

Le volet divergent 42B comporte en outre une paroi de fermeture 152 respective qui relie une extrémité amont 64E de la paroi interne 64 de ce volet à une extrémité amont 76E de la paroi externe 76 de ce volet, et qui délimite ainsi la portion d'extrémité amont 82 du conduit 78.

La portion d'extrémité amont 82 du conduit 78 est ainsi incurvée vers l'amont et radialement vers l'extérieur.

La portion d'extrémité amont 82 du conduit de circulation d'air de refroidissement 78 est interposée entre la charnière 45 et la paroi de fermeture 150 du volet convergent 40B. Plus généralement, le conduit 78 est ainsi interposé entre l'axe de pivotement 87 et la surface de contact de volet convergent 151.

Par exemple, la surface externe 88A de la portion d'extrémité amont 88 de la paroi externe 76 du volet divergent 42B est appliquée sur une surface externe 45A de la charnière 45 de forme cylindrique de révolution centrée sur l'axe de pivotement 87, de sorte que la portion d'extrémité amont 88 contourne la charnière 45.

Selon une particularité de l'invention, la surface de contact de volet divergent 93 est ainsi agencée directement en regard de la surface de contact de volet convergent 151, de sorte que la surface de contact de volet divergent 93 glisse le long de la surface de contact de volet convergent 151 lorsque le volet divergent 42B pivote par rapport au volet convergent 40B autour de l'axe de pivotement 87.

Il est remarquable à cet effet que la surface de contact de volet convergent 151 et la surface de contact de volet divergent 93 présentent des formes semblables.

De plus, la surface de contact de volet convergent 151 est pourvue de premiers orifices de passage d'air 154 débouchant dans le conduit de circulation d'air de refroidissement 70 du volet convergent 40B. La surface de contact de volet divergent 93 est pourvue de deuxièmes orifices de passage d'air 156 débouchant dans le conduit de circulation d'air de refroidissement 78 du volet divergent 42B.

Les premiers orifices de passage d'air 154 et les deuxièmes orifices de passage d'air 156 sont conformés et positionnés de sorte que les premiers orifices de passage d'air 154 soient agencés directement en regard des deuxièmes orifices de passage d'air 156 respectivement, et mettent ainsi en communication le conduit de circulation d'air de refroidissement 70 du volet convergent 40B avec le conduit de circulation d'air de refroidissement 78 du volet divergent 42B, quelle que soit la configuration angulaire adoptée par le couple volet convergent-volet divergent 52B.

À cet effet, les premiers orifices de passage d'air 154 sont par exemple de section circulaire, tandis que les deuxièmes orifices de passage d'air 156 sont par exemple de section allongée selon des plans respectifs comprenant la direction longitudinale X' du volet divergent 42B.

Les modalités de raccordement des conduits 70 et 78 décrites ci-dessus peuvent être inversées, entre chacun des conduits, sans sortir du cadre de l'invention. Il faut comprendre par-là que le conduit 70 du volet convergent 40B peut comporter une portion d'extrémité aval incurvée vers l'aval et radialement vers l'extérieur correspondant à une configuration inversée de la portion d'extrémité amont 82 du conduit 78 décrit ci-dessus, tandis que le volet divergent 42B comporte une paroi de fermeture de forme complémentaire, correspondant à une configuration inversée de la paroi de fermeture 150 du volet convergent 40B décrite ci-dessus.

Néanmoins, un avantage particulier de l'exemple décrit ci-dessus réside dans le fait que l'orientation des surfaces de contact 93 et 151 permet que d'éventuelles fuites d'air LF entre le conduit de circulation d'air de refroidissement 70 du volet convergent 40B et le conduit de circulation d'air de refroidissement 78 du volet divergent 42B débouchent dans le conduit de circulation de gaz de combustion 39 dans le sens de l'écoulement du flux de gaz F4. Les pertes de charges induites par les éventuelles fuites d'air LF sont ainsi minimisées. De plus, ces éventuelles fuites d'air LF peuvent ainsi former un film de refroidissement le long de la surface de canalisation de gaz de combustion 66 du volet divergent 42B, et contribuer ainsi au refroidissement du volet divergent 42B.

Par ailleurs, le volet divergent 42B comporte une paroi d'extrémité aval 100 respective (figures 4 et 6) agencée à une extrémité aval du conduit de circulation d'air de refroidissement 78 du volet divergent 42B, et ménageant au moins une ouverture 110 par laquelle ce conduit débouche vers l'aval. Il faut comprendre par-là qu'au moins une telle ouverture est formée dans la paroi d'extrémité aval 100 et/ou qu'au moins une telle ouverture est adjacente à la paroi d'extrémité aval 100, c'est-à-dire ménagée entre un bord de la paroi d'extrémité aval 100 et l'une parmi la paroi interne 64, la paroi externe 76, et les parois d'extrémités latérales 80. La paroi d'extrémité aval 100 relie ainsi entre elles au moins certaines parmi la paroi interne 64, la paroi externe 76, et les parois d'extrémités latérales 80.

Une telle ouverture 110 permet l'échappement du flux d'air de refroidissement CF1 hors du conduit de circulation d'air de refroidissement 78 du volet divergent 42B vers l'aval, en fonctionnement.

Le conduit de circulation d'air de refroidissement 78 du volet divergent 42B s'étend avantageusement jusqu'à l'extrémité aval de la paroi interne 64 de ce volet, de sorte que l'intégralité de cette paroi est refroidie par le flux d'air de refroidissement CF1 en fonctionnement.

Par ailleurs, la tuyère 28 comporte avantageusement un espace de sortie d'air 120 ménagé entre une extrémité aval du volet divergent 42B et une extrémité aval du volet externe mobile 68 agencé en regard du volet divergent 42B (figure 4). Un tel espace de sortie d'air 120 permet l'échappement d'air provenant d'éventuelles fuites LF2 entre volets internes mobiles circonférentiellement adjacents, et/ou d'air TA provenant d'un plenum extérieur, couramment dénommé « tunnel », entourant le turboréacteur au sein du fuselage d'un aéronef.

En fonctionnement, le flux de gaz F4, constitué par le mélange des gaz de combustion issus de la veine primaire, et du flux secondaire F3, circule dans le canal de postcombustion 26, puis s'échappe du turboréacteur 10 au travers de la tuyère 28, comme expliqué ci-dessus en référence à la figure 2.

Le flux d'air de refroidissement CF1 circule le long de l'enveloppe extérieure 32 au sein du plenum de refroidissement 36 (figure 2) puis pénètre dans le conduit de circulation d'air de refroidissement 70 d'un volet convergent 40B par l'embout 73 de ce dernier (figure 4).

Le flux d'air de refroidissement CF1 circule dans le conduit de circulation d'air de refroidissement 70 jusqu'à la portion d'extrémité aval 84 de celui-ci, refroidissant ainsi le volet convergent 40B, en particulier la paroi interne 56 de ce volet.

Puis le flux d'air de refroidissement CF1 pénètre dans le conduit de circulation d'air de refroidissement 78 du volet divergent 42B correspondant en passant au travers des premier orifices de passage d'air 154 puis des deuxièmes orifices de passage d'air 156.

Le flux d'air de refroidissement CF1 circule dans le conduit de circulation d'air de refroidissement 78 jusqu'à l'extrémité aval de ce dernier, refroidissant ainsi le volet divergent 42B, en particulier la paroi interne 64 de ce volet.

Enfin, le flux d'air de refroidissement CF1 s'échappe du conduit de circulation d'air de refroidissement 78 au travers de l'ouverture (ou de chaque ouverture) ménagée par la paroi d'extrémité aval 100.

Par ailleurs, dans un autre mode de réalisation de l'invention, le volet divergent est dépourvu de conduit de circulation d'air de refroidissement, mais comporte en revanche un conduit d'éjection d'air de refroidissement, ayant une étendue longitudinale limitée par rapport à celle de la paroi de canalisation de gaz de combustion, et débouchant en regard de la surface de canalisation de gaz de combustion de celle-ci de manière à éjecter l'air de refroidissement, provenant du conduit de circulation d'air de refroidissement du volet convergent, le long de la surface interne de canalisation de gaz de combustion de la paroi de canalisation de gaz de combustion du volet divergent.

Dans un tel cas, le conduit d'éjection d'air de refroidissement est délimité entre une partie amont de la paroi externe du volet divergent et la paroi interne du volet divergent. Cette dernière forme une paroi de guidage de l'air, tandis que la paroi externe du volet divergent forme, en aval du conduit d'éjection d'air de refroidissement, la paroi de canalisation de gaz de combustion de ce volet.

Dans la terminologie générale de la présente invention, le « conduit d'air de refroidissement » du volet divergent désigne ainsi indifféremment un conduit de circulation d'air de refroidissement ou un conduit d'éjection d'air de refroidissement.

Dans des modes de réalisation de l'invention, les modalités de refroidissement décrites ci-dessus en ce qui concerne les couples volet convergent-volet divergent suiveurs 52B sont également valables en ce qui concerne les couples volet convergent-volet divergent commandés 52A.

Dans d'autres modes de réalisation de l'invention, les couples volet convergent-volet divergent commandés 52A présentent des caractéristiques différentes, et comportent par exemple des volets à simple peau, c'est-à-dire dépourvus de conduit de canalisation de flux d'air de refroidissement. Les volets commandés sont en effet généralement moins exposés à la chaleur des gaz de combustion que les volets suiveurs. Par exemple, sur la figure 3, il est clair que chaque volet divergent suiveur 42B présente des parties d'extrémité latérale 42B-L s'étendant respectivement devant des parties d'extrémités latérales 42A-L respectives des deux volets divergents commandés 42A adjacents, et masquent ainsi ces parties d'extrémités latérales respectives des volets divergents commandés 42A vis-à-vis des gaz de combustion. Ainsi, seule une partie médiane 42A-M respective de chaque volet divergent commandé 42A est exposée directement aux gaz de combustion.

De manière générale, l'invention est applicable à tout type de turboréacteur comprenant une tuyère de type convergente-divergente à géométrie variable, et en particulier du type comprenant en outre un canal de postcombustion en amont de ladite tuyère.

## Revendications

1. Couple volet convergent-volet divergent (52B) pour tuyère (28) de turboréacteur de type convergente-divergente à géométrie variable, comprenant un volet convergent (40B), et un volet divergent (42B) monté pivotant sur le volet convergent autour d'un axe de pivotement (87), moyennant quoi le couple volet convergent-volet divergent est apte à passer d'une première configuration angulaire extrême, dans laquelle le volet convergent et le volet divergent font entre eux un angle saillant maximal, à une deuxième configuration angulaire extrême, dans laquelle le volet convergent et le volet divergent font entre eux un angle saillant minimal inférieur à l'angle saillant maximal,
dans lequel le volet convergent (40B) comporte une paroi interne (56) respective, présentant une surface interne de canalisation de gaz de combustion (58) respective et une surface externe (59) respective, et une paroi externe (60) respective,
dans lequel le volet convergent comporte un conduit de circulation d'air de refroidissement (70) respectif défini entre la surface externe (59) respective de la paroi interne respective du volet convergent, et la paroi externe (60) respective du volet convergent,
dans lequel le volet divergent (42B) comporte une paroi interne (64) respective, présentant une surface interne de canalisation de gaz de combustion (66) respective et une surface externe (67) respective, et une paroi externe (76) respective,
dans lequel le volet divergent comporte un conduit d'air de refroidissement (78) respectif défini entre la surface externe (67) respective de la paroi interne (64) respective du volet divergent et la paroi externe (76) respective du volet divergent,
dans lequel le volet convergent (40B) comporte une surface de contact de volet convergent (151) en forme de portion de cylindre ayant pour axe de courbure l'axe de pivotement (87) et pourvue de premiers orifices de passage d'air (154) débouchant dans le conduit de circulation d'air de refroidissement (70) respectif du volet convergent,
dans lequel le volet divergent (42B) comporte une surface de contact de volet divergent (93) en forme de portion de cylindre ayant pour axe de courbure l'axe de pivotement (87) et pourvue de deuxièmes orifices de passage d'air (156) débouchant dans le conduit d'air de refroidissement (78) respectif du volet divergent,
dans lequel la surface de contact de volet divergent (93) est agencée directement en regard de la surface de contact de volet convergent (151), de sorte que la surface de contact de volet divergent (93) glisse le long de la surface de contact de volet convergent (151) lorsque le volet divergent (42B) pivote par rapport au volet convergent (40B),
dans lequel les premiers orifices de passage d'air (154) et les deuxièmes orifices de passage d'air (156) sont conformés et positionnés de sorte que les premiers orifices de passage d'air (154) soient agencés directement en regard des deuxièmes orifices de passage d'air (156) respectivement et mettent ainsi en communication le conduit de circulation d'air de refroidissement (70) respectif du volet convergent et le conduit d'air de refroidissement (78) respectif du volet divergent, quelle que soit la configuration angulaire adoptée par le couple volet convergent-volet divergent (52B).

2. Couple volet convergent-volet divergent selon la revendication 1, dans lequel un premier conduit, parmi le conduit de circulation d'air de refroidissement (70) respectif du volet convergent et le conduit d'air de refroidissement (78) respectif du volet divergent, est interposé entre l'axe de pivotement (87) et une surface correspondante, parmi la surface de contact de volet convergent (151) et la surface de contact de volet divergent (93).

3. Couple volet convergent-volet divergent selon la revendication 2, dans lequel la paroi interne respective de celui, parmi le volet convergent (40B) et le volet divergent (42B), qui comporte ledit premier conduit, présente une portion d'extrémité (92) incurvée sur laquelle est formée ladite surface correspondante et comportant ceux, parmi les premiers orifices de passage d'air (154) et les deuxièmes orifices de passage d'air (156), qui appartiennent à ladite surface correspondante.

4. Couple volet convergent-volet divergent selon la revendication 2 ou 3, dans lequel celui, parmi le volet convergent (40B) et le volet divergent (42B), qui comporte l'autre conduit parmi le conduit de circulation d'air de refroidissement (70) respectif du volet convergent et le conduit d'air de refroidissement (78) respectif du volet divergent, comporte une paroi de fermeture (150) respective, sur laquelle est formée l'autre surface, parmi la surface de contact de volet convergent (151) et la surface de contact de volet divergent (93), ladite paroi de fermeture (150) comportant ceux, parmi les premiers orifices de passage d'air (154) et les deuxièmes orifices de passage d'air (156), qui appartiennent à ladite autre surface, et ladite paroi de fermeture (150) reliant mutuellement deux extrémités respectives (56E, 60E) de la paroi interne (56) et de la paroi externe (60) du volet.

5. Couple volet convergent-volet divergent selon l'une quelconque des revendications 2 à 4, dans lequel ledit premier conduit est le conduit d'air de refroidissement (78) respectif du volet divergent.

6. Couple volet convergent-volet divergent selon l'une quelconque des revendications 1 à 5, dans lequel :
- le volet convergent (40B) comporte deux parois d'extrémités latérales (72) respectives reliant chacune la paroi interne (56) respective du volet convergent à la paroi externe (60) respective du volet convergent, de sorte que le conduit de circulation d'air de refroidissement (70) respectif du volet convergent est en outre délimité par les deux parois d'extrémités latérales (72) respectives du volet convergent, et
- le volet divergent (42B) comporte deux parois d'extrémités latérales (80) respectives reliant chacune la paroi interne (64) respective du volet divergent à la paroi externe (76) respective du volet divergent, de sorte que le conduit d'air de refroidissement (78) respectif du volet divergent est en outre délimité par les deux parois d'extrémités latérales (80) respectives du volet divergent.

7. Tuyère (28) de type convergente-divergente à géométrie variable pour turboréacteur, comprenant des couples volet convergent-volet divergent répartis autour d'un axe (11) de la tuyère et dont au moins certains sont des couples volet convergent-volet divergent selon l'une quelconque des revendications 1 à 6, et un canal de circulation de gaz de combustion (39) délimité au moins par les surfaces internes de canalisation de gaz de combustion (58, 66) respectives des parois internes respectives des volets convergents (40B) respectifs et des volets divergents (42B) respectifs des couples volet convergent-volet divergent selon l'une quelconque des revendications 1 à 6.

8. Turboréacteur pour aéronef, comprenant un canal de postcombustion (26) entouré d'un plenum de refroidissement (36) séparé du canal de postcombustion (26) par une chemise de protection thermique (34), et une tuyère (28) selon la revendication 7, dans lequel les conduits de circulation d'air de refroidissement (70) respectifs des volets convergents (40B) des couples volet convergent-volet divergent (52B) selon l'une quelconque des revendications 1 à 6 de la tuyère sont raccordés au plenum de refroidissement (36) entourant le canal de postcombustion (26).

## Patentansprüche

1. Konvergente Klappe-divergente Klappe (52B) für eine Turbostrahltriebwerkdüse (28) vom konvergent-divergenten Typ mit variabler Geometrie, umfassend eine konvergente Klappe (40B) und eine divergente Klappe (42B), die auf der konvergenten Klappe um eine Schwenkachse (87) herum schwenkbar montiert ist, wobei das konvergent-divergente Klappenpaar in der Lage ist, von einer ersten extremen Winkelkonfiguration, in der die konvergente Klappe und die divergente Klappe zwischen ihnen einen maximalen Schrägwinkel bilden, zu einer zweiten extremen Winkelkonfiguration überzugehen, in der die konvergente Klappe und die divergente Klappe zwischen ihnen einen minimalen Schrägwinkel bilden, der kleiner ist als der maximale vorspringende Winkel,
wobei die konvergente Klappe (40B) eine zugehörige Innenwand (56) beinhaltet, die eine zugehörige Innenoberfläche zur Kanalisierung (58) von Verbrennungsgas und eine zugehörige Außenoberfläche (59) und eine zugehörige Außenwand (60) aufweist,
wobei die konvergente Klappe eine zugehörige Kühlluft-Zirkulationsleitung (70) beinhaltet, die zwischen der zugehörigen Außenoberfläche (59) der zugehörigen Innenwand der konvergenten Klappe und der zugehörigen Außenwand (60) der konvergenten Klappe definiert ist,
wobei die divergente Klappe (42B) eine zugehörige Innenwand (64) beinhaltet, die eine zugehörige Innenoberfläche (66) zur Kanalisierung von Verbrennungsgas und eine zugehörige Außenoberfläche (67) aufweist, und eine zugehörige Außenwand (76) aufweist,
wobei die divergente Klappe eine zugehörige Kühlluftleitung (78) beinhaltet, die zwischen der zugehörigen Außenoberfläche (67) der zugehörigen Innenwand (64) der divergenten Klappe und der zugehörigen Außenwand (76) der divergenten Klappe definiert ist,
wobei die konvergente Klappe (40B) eine Kontaktoberfläche (151) der konvergenten Klappe in Form eines Zylinderabschnitts beinhaltet, der als Krümmungsachse die Schwenkachse (87) aufweist und mit ersten Luftdurchgangsöffnungen (154) versehen ist, die in der zugehörigen Kühlluft-Zirkulationsleitung (70) der konvergenten Klappe münden,
wobei die divergente Klappe (42B) eine Kontaktoberfläche (93) der divergenten Klappe in Form eines Zylinderabschnitts beinhaltet, der als Krümmungsachse die Schwenkachse (87) aufweist und mit zweiten Luftdurchgangsöffnungen (156) versehen ist, die in der zugehörigen Kühlluftleitung (78) der divergenten Klappe münden,
wobei die Kontaktoberfläche der divergenten Klappe (93) direkt gegenüber der Kontaktoberfläche (151) der konvergenten Klappe derart angeordnet ist, dass die Kontaktoberfläche (93) der divergenten Klappe entlang der Kontaktoberfläche (151) der konvergenten Klappe gleitet, wenn die divergente Klappe (42B) bezüglich der konvergenten Klappe (40B) schwenkt,
wobei die ersten Luftdurchgangsöffnungen (154) und die zweiten Luftdurchgangsöffnungen (156) derart angepasst und positioniert sind, dass die ersten Luftdurchgangsöffnungen (154) direkt gegenüber der zugehörigen zweiten Luftdurchgangsöffnungen (156) angeordnet sind und somit die zugehörige Kühlluft-Zirkulationsleitung (70) der konvergenten Klappe und die zugehörige Kühlluftleitung (78) der divergenten Klappe unabhängig von der durch das konvergent-divergente Klappenpaar (52B) angenommenen Winkelkonfiguration in Verbindung bringen.

2. Konvergent-divergentes Klappenpaar nach Anspruch 1, wobei eine erste Leitung unter der zugehörigen Kühlluft-Zirkulationsleitung (70) der konvergenten Klappe und der zugehörigen Kühlluftleitung (78) der divergenten Klappe zwischen der Schwenkachse (87) und einer entsprechenden Oberfläche unter der Kontaktoberfläche (151) der konvergenten Klappe und der Kontaktoberfläche (93) der divergenten Klappe eingefügt ist.

3. Konvergent-divergentes Klappenpaar nach Anspruch 2, wobei die zugehörige Innenwand davon, die unter der konvergenten Klappe (40B) und der divergenten Klappe (42B) die erste Leitung beinhaltet, einen gebogenen Endabschnitt (92) aufweist, auf dem die entsprechende Oberfläche gebildet ist und unter den ersten Luftdurchgangsöffnungen (154) und den zweiten Luftdurchgangsöffnungen (156) diese beinhaltet, die zu der entsprechenden Oberfläche gehören.

4. Konvergent-divergentes Klappenpaar nach Anspruch 2 oder 3, wobei unter der konvergenten Klappe (40B) und der divergenten Klappe (42B), diejenige, die die andere Leitung unter der zugehörigen Kühlluft-Zirkulationsleitung (70) der konvergenten Klappe und der zugehörigen Kühlluftleitung (78) der divergenten Klappe beinhaltet, eine zugehörige Abschlusswand (150) umfasst, auf der die andere Oberfläche unter der Kontaktoberfläche (151) der konvergenten Klappe und der Kontaktoberfläche (93) der divergenten Klappe gebildet ist, wobei die Abschlusswand (150), die jene unter den ersten Luftdurchgangsöffnungen (154) und den zweiten Luftdurchgangsöffnungen (156) beinhaltet, die zu der anderen Oberfläche gehören, und die Abschlusswand (150) zwei zugehörige Enden (56E, 60E) der Innenwand (56) und der Außenwand (60) der Klappe miteinander verbindet.

5. Konvergent-divergentes Klappenpaar nach einem der Ansprüche 2 bis 4, wobei die erste Leitung die zugehörige Kühlluftleitung (78) der divergenten Klappe ist.

6. Konvergent-divergentes Klappenpaar nach einem der Ansprüche 1 bis 5, wobei:
- Die konvergente Klappe (40B) zwei zugehörige seitliche Endwände (72) beinhaltet, die jeweils die zugehörige Innenwand (56) der konvergenten Klappe mit der zugehörigen Außenwand (60) der konvergenten Klappe derart verbinden, dass die zugehörige Kühlluft-Zirkulationsleitung (70) der konvergenten Klappe des Weiteren durch die zwei zugehörigen seitlichen Endwände (72) der konvergenten Klappe begrenzt sind, und
- die divergente Klappe (42B) zwei zugehörige seitliche Endwände (80) beinhaltet, die jeweils die zugehörige Innenwand (64) der divergenten Klappe mit der zugehörigen Außenwand (76) der divergenten Klappe derart verbinden, dass die zugehörige Kühlluftleitung (78) der divergenten Klappe des Weiteren durch die zwei zugehörigen seitlichen Endwände (80) der divergenten Klappe begrenzt sind.

7. Düse (28) vom konvergent-divergenten Typ mit variabler Geometrie für ein Turbostrahltriebwerk, umfassend um eine Achse (11) der Düse herum verteilte konvergent-divergente Klappenpaare, und von denen mindestens einige konvergent-divergente Klappenpaar gemäß einem der Ansprüche 1 bis 6 sind und einen Verbrennungsgas-Zirkulationskanal (39), der mindestens durch die zugehörigen Innenoberflächen der Verbrennungsgaskanalisierung (58, 66) von zugehörigen Innenwänden der zugehörigen konvergenten Klappen (40B) und der zugehörigen divergenten Klappen (42B) der konvergent-divergenten Klappenpaare gemäß einem der Ansprüche 1 bis 6 begrenzt ist.

8. Turbostrahltriebwerk für Luftfahrzeug, umfassend einen Nachverbrennungskanal (26) der von einem Kühlluftkammer (36) umgeben ist, das von dem Nachverbrennungskanal (26) durch einen Wärmeschutzmantel (34) getrennt ist, und eine Düse (28) nach Anspruch 7,
wobei die zugehörigen Kühlluft-Zirkulationsleitungen (70) der konvergenten Klappen (40B) der konvergent-divergenten Klappenpaare (52B) nach einem der Ansprüche 1 bis 6 der Düse an das Kühlluftkammer (36), das den Nachverbrennungskanal (26) umgibt, angeschlossen sind.

## Claims

1. Convergent-divergent flap pair (52B) for a turbojet engine nozzle (28) of the variable-geometry convergent-divergent type, comprising a convergent flap (40B), and a divergent flap (42B) mounted pivotably on the convergent flap about a pivot axis (87), whereby the convergent-divergent flap pair is capable of going from a first extreme angular configuration, in which the convergent flap and the divergent flap make between them a maximum salient angle, to a second extreme angular configuration, in which the convergent flap and the divergent flap make between them a minimum salient angle smaller than the maximum salient angle,
wherein the convergent flap (40B) includes a respective inner wall (56), having a respective inner surface for channelling combustion gas (58) and a respective outer surface (59), and a respective outer wall (60),
wherein the convergent flap includes a respective cooling air circulation duct (70) defined between the respective outer surface (59) of the respective inner wall of the convergent flap and the respective outer wall (60) of the convergent flap,
wherein the divergent flap (42B) includes a respective inner wall (64) which has a respective inner surface for channelling combustion gas (66), and a respective outer wall (76),
wherein the divergent flap includes a respective cooling-air duct (78) defined between the respective outer surface (67) of the respective inner wall (64) of the divergent flap and the respective outer wall (76) of the divergent flap,
wherein the convergent flap (40B) includes a convergent-flap contact surface (151) in the shape of a cylinder portion, the axis of curvature of which is the pivot axis (87), and provided with first air passage openings (154) opening into the respective cooling air circulation duct (70) of the convergent flap,
wherein the divergent flap (42B) includes a divergent-flap contact surface (93) in the shape of a cylinder portion, the axis of curvature of which is the pivot axis (87), and provided with second air passage openings (156) opening into the respective cooling-air duct (78) of the divergent flap,
wherein the divergent-flap contact surface (93) is arranged directly opposite the convergent-flap contact surface (151), so that the divergent-flap contact surface (93) slides along the convergent-flap contact surface (151) when the divergent flap (42B) pivots with respect to the convergent flap (40B),
wherein the first air passage openings (154) and the second air passage openings (156) are shaped and positioned so that the first air passage openings (154) are arranged directly opposite the second air passage openings (156), respectively, and thus place in communication the respective cooling air circulation duct (70) of the convergent flap and the respective cooling-air duct (78) of the divergent flap, regardless of the angular configuration adopted by the convergent-divergent flap pair (52B).

2. Convergent-divergent flap pair according to claim 1, wherein a first duct, out of the respective cooling air circulation duct (70) of the convergent flap and the respective cooling-air duct (78) of the divergent flap, is interposed between the pivot axis (87) and a corresponding surface out of the convergent-flap contact surface (151) and the divergent-flap contact surface (93).

3. Convergent-divergent flap pair according to claim 2, wherein the respective inner wall of the one out of the convergent flap (40B) and the divergent flap (42B) that includes said first duct has a curved end portion (92) on which said corresponding surface is formed and including those out of the first air passage openings (154) and the second air passage openings (156) which belong to said corresponding surface.

4. Convergent-divergent flap pair according to claim 2 or 3, wherein the one out of the convergent flap (40B) and the divergent flap (42B) that includes the other duct out of the respective cooling air circulation duct (70) of the convergent flap and the respective cooling-air duct (78) of the divergent flap includes a respective closing wall (150), on which the other surface, out of the convergent-flap contact surface (151) and the divergent-flap contact surface (93), is formed, said closing wall (150) including those out of the first air passage openings (154) and the second air passage openings (156) which belong to said other surface, and said closing wall (150) mutually connecting two respective ends (56E, 60E) of the inner wall (56) and of the outer wall (60) of the flap.

5. Convergent-divergent flap pair according to any one of claims 2 to 4, wherein said first duct is the respective cooling-air duct (78) of the divergent flap.

6. Convergent-divergent flap pair according to any one of claims 1 to 5, wherein:
- the convergent flap (40B) includes two respective lateral end walls (72) each connecting the respective inner wall (56) of the convergent flap to the respective outer wall (60) of the convergent flap, so that the respective cooling air circulation duct (70) of the convergent flap is further defined by the two respective lateral end walls (72) of the convergent flap, and
- the divergent flap (42B) includes two respective lateral end walls (80) each connecting the respective inner wall (64) of the divergent flap to the respective outer wall (76) of the divergent flap, so that the respective cooling-air duct (78) of the divergent flap is further defined by the two respective lateral end walls (80) of the divergent flap.

7. Nozzle (28) of the variable-geometry convergent-divergent type for a turbojet engine, comprising convergent-divergent flap pairs distributed around an axis (11) of the nozzle and at least some of which are convergent-divergent flap pairs according to any one of claims 1 to 6, and a channel for circulation of combustion gas (39) defined at least by the respective inner surfaces for channelling combustion gas (58, 66) of the respective inner walls of the respective convergent flaps (40B) and of the respective divergent flaps (42B) of the convergent-divergent flap pairs according to any one of claims 1 to 6.

8. Turbojet engine for an aircraft, comprising a reheat channel (26) surrounded by a cooling plenum (36) separated from the reheat channel (26) by a thermal protection liner (34), and a nozzle (28) according to claim 7,
wherein the respective cooling air circulation ducts (70) of the convergent flaps (40B) of the convergent-divergent flap pairs (52B) according to any one of claims 1 to 6 of the nozzle are connected to the cooling plenum (36) surrounding the reheat channel (26).
